# EUROPÄISCHE PATENTSCHRIFT

(11) **EP 1 641 226 B1**
(45) Veröffentlichungstag und Bekanntmachung des Hinweises auf die Patenterteilung: **22.08.2012**
(21) Anmeldenummer: 05020445.2
(22) Anmeldetag: 20.09.2005
(51) Int. Cl.: H04M 1/60

(54) **System zum Betrieb eines drahtlosen Kommunikationsgerätes in einem Fahrzeug**
System for operating a mobile communication terminal in a vehicle
Système pour opérer un terminal de communication sans fil dans un vehicule

(30) Priorität: 22.09.2004 DE 102004046211
(43) Veröffentlichungstag der Anmeldung: 29.03.2006
(73) Patentinhaber: Peiker, Andreas, 61381 Friedrichsdorf/Ts (DE)
(72) Erfinder: Peiker, Andreas, 61381 Friedrichsdorf/Ts (DE)
(74) Vertreter: Otten, Herbert

(56) Entgegenhaltungen:
- EP-A- 1 168 784
- WO-A-2004/080042
- DE-A1- 10 205 641
- "BMW Handy, Bedienung über MID, MFL, Bordcomputer" BMW, 1999, XP002277916

## Beschreibung

Die Erfindung betrifft ein Fahrzeugkommunikationssystem, welches eine Anzeigeeinrichtung und eine Bedieneinrichtung umfasst.

Ein Fahrzeugkommunikationssystem ist beispielsweise aus der DE 103 05 168 A1 bekannt. Dieses dient unter anderem zur Anzeige von Informationen, welche mit dem in das Fahrzeug integrierten Mobiltelefon empfangenen wurden oder in diesem gespeichert sind. Weiterhin erlaubt das bekannte System über ein Benutzereingabemittel die Auswahl von auf der Anzeigeeinrichtung dargestellten Optionen. Nachteilig an einem derartigen System ist, dass der Nutzer, der sich mühsam an die Menüstruktur bzw. die Funktionsweise seines Mobiltelefons gewöhnt hat, bei der Verwendung seines Mobiltelefons im Fahrzeug auf der fahrzeugeigenen Anzeigeeinrichtung mit einer optisch und logisch anders aufgebauten Menüstruktur konfrontiert wird. Hierdurch benötigt der Nutzer gerade im Fahrzeug, wo der größtmögliche Anteil seiner Aufmerksamkeit dem Verkehrsgeschehen gelten sollte, eine erhöhte Konzentration, um die andersartige Darstellung zu erfassen und die andersartige Abfrage und Eingabe von Informationen zu tätigen.

Aus der DE 102 05 641 A 1 ist eine Multifunktions-Bedieneinrichtung bekannt geworden. Hier wird eine Bedienoberfläche eines dem Nutzer außerhalb des Fahrzeugs bekannten, realen Endgeräts im Fahrzeug simuliert, derart, dass dem Nutzer bei der Bedienung dieses Geräts im Kraftfahrzeug die vertraute Oberfläche des Gerätes dargestellt wird. Die Bedienoberfläche eines realen separaten Endgeräts wird demnach im Kraftfahrzeug lediglich simuliert, ohne dass dieses Gerät im Fahrzeug vorhanden sein muss.

Der Erfindung liegt die Aufgabe zugrunde, ein Fahrzeugkommunikationssystem zu entwickeln, bei welchem für den Nutzer trotz der Verwendung einer fahrzeugeigenen Anzeigeeinrichtung und einer fahrzeugeigenen Bedieneinrichtung keine Umstellungsschwierigkeiten für den Nutzer entstehen, welcher an ein bestimmtes Mobiltelefon aus einer Vielzahl von unterschiedlichen Mobiltelefonen gewohnt ist.

Die Aufgabe wird ausgehend von den Merkmalen des Oberbegriffs des Anspruchs 1 erfindungsgemäß durch die kennzeichnenden Merkmale des Anspruchs 1 gelöst. In den Unteransprüchen sind vorteilhafte und zweckmäßige Weiterbildungen angegeben.

Das erfindungsgemäße Fahrzeugkommunikationssystem sieht vor ausgehend von einem vom Nutzer verwendeten Mobiletelefon einen theoretischen bzw. tatsächlichen Inhalt des Mobiltelefondisplays dieses Mobiltelefons einschließlich der Softkeys auf der fahrzeugeigenen Anzeigeeinrichtung darzustellen und eine Bedienbarkeit der auf der fahrzeugeigenen Anzeigeinrichtung dargestellten Softkeys über die Bedieneinrichtung vorzusehen. Hierdurch erhält der Nutzer gegebenenfalls in vergrößerter und somit leichter erkennbarer Darstellung den aus der Handbedienung seines jeweiligen Mobiltelefons bekannten Displayinhalt angezeigt. Diesen kann er aufgrund seiner Übung rasch und ohne unnötige Ablenkung erfassen und über die Bedieneinrichtung in gewohnter Weise steuern. Kern der Erfindung ist somit eine Angleichung der dem Nutzer außerhalb und innerhalb des Fahrzeugs bei der Kommunikation mittels eines Mobiltelefons zur Verfügung stehenden Schnittstelle. Hierbei sorgt die

Angleichung einer fahrzeugeigenen Anzeigeeinrichtung und eines Mobiltelefondisplays eines beliebigen Mobiltelefons aus einer Vielzahl unterschiedlicher Mobiltelefone dafür, dass der Nutzer bei der Bedienung des Fahrzeugkommunikationssystems auf außerhalb des Fahrzeugs erlernte Erkennungs- und Reaktionsmuster zurückreifen kann. Durch die Nutzung dieser außerhalb des Fahrzeugs, also in unkritischer Umgebung, erlernten Routine ist sicher gestellt, dass ein Maximum an Aufmerksamkeit für das Verkehrgeschehen zur Verfügung steht.

Die Erfindung sieht weiterhin ein Fahrzeuginformationssystem mit einem Mobiltelefon, das ein Mobiltelefondisplay aufweist, und/oder einem Telefonmodul, welches SIM-Daten des Mobiltelefons oder einer zweiten SIM-Karte verwendet, vor. Hierdurch ist es möglich das Fahrzeuginfcrmationssystem mit Mobiltelefonen zu betreiben, welche über eine BlueTooth-Schnittstelle verfügen und welche über keine BlueTooth-Schnittstelle verfügen. Somit sind praktisch alle Mobiltelefone im System kombinierbar, wobei auch ein Wechsel von einem Mobiltelefon ohne BlueTooth-Schnittstelle auf ein Mobiltelefon mit BlueTooth-Schnittstelle möglich ist.

Es ist von besonderem Vorteil, wenn die SIM-Daten des Mobiltelefons vom Telefonmodul via Sim-Access-Profile beziehbar sind. Hierdurch ist eine rasche und sichere Übergabe der Daten möglich.

Weiterhin sieht die Erfindung vor, die Anzeigeeinrichtung und/oder die Bedieneinrichtung mittels des Mobiltelefons und/oder einer sich identisch wie das Mobiltelefon verhaltenden Steuereinheit zu steuern. Hierdurch ist es möglich, einen Betrieb des Fahrzeugkommunikationssystems mit den unterschiedlichsten Mobiltelefonen zu gewährleisten.

Die Erfindung sieht auch vor, eine erste Funkverbindung zwischen dem Mobiltelefon und der Anzeigeeinrichtung einzurichten, welche wenigstens den jeweiligen Displayinhalt an die Anzeigeinrichtung übermittelt, und zwischen dem Mobiltelefon and der Hedieneinricrtung eine weitere Funkverbindung einzurichten, welche wenigstens Schaltsignale von der Bedieneinrichtung empfängt. Hierdurch lässt sich ein erfindungsgemäßes Fahrzeugkommunikationssystem mit minimalem Installationsaufwand realisieren.

Um den Installationsaufwand noch weiter zu reduzieren, ist es vorgesehen, das Mobiltelefon mittels einer Koppelantenne, welche mit einer Fahrzeugaußenantenne verbunden ist, in ein Funknetz einzubinden.

Erfindungsgemäß ist es vorgesehen, die Anzeigeeinrichtung als Projektionsanzeige bzw. sogenanntes Headup-Display auszugestalten, bei welcher von einer. Projektor Informationen auf die Scheibe des Fahrzeugs projiziert werden. Hierdurch ist eine besonders große Darstellung des Displayinhalts möglich.

Weiterhin sieht die Erfindung eine Versorgung der Anzeigeeinrichtung und/oder des Telefonmoduls mittels Photovoltaikelementen vor. Bei der Anzeigeinrichtung ist auch eine Anordnung der Photovoltaikelement im Display möglich. Durch diese energieautarke Ausbildung der Anzeigeinrichtung und/oder des Telefonmoduls wird der Installationsaufwand insbesondere dann verringert, wenn auch eine Datenübertragung über Funk vorgesehen ist.

Im Sinne der Erfindung ist unter dem Begriff Displayprofil das Verhalten eines beliebigen Mobiltelefons aus einer Vielzahl unterschiedlicher Mobiltelefone bezüglich des Inhalts des Mobiltelefondisplays einschließlich der Softkeys zu verstehen. Unter einem Softkey ist im Sinne der Erfindung eine in einem Display angezeigte Funktion zu verstehen, welche durch eine der Position der angezeigten Funktion zugeordnete Taste anwählbar ist.

Weitere Einzelheiten der Erfindung werden in der Zeichnung anhand von schematisch dargestellten Ausführungsbeispielen beschrieben.

Hierbei zeigt:
- Figur 1: ein Fahrzeuginformationssystem, bei welchem ein Mobiltelefon mittels Sim-Access-Profile eingebucht ist,
- Figur 2: ein Fahrzeuginformationssystem, bei welchem ein Mobiltelefon mittels Sim-Access-Profile eingebucht ist und welches eine externe Steuerung für die Anzeigeeinrichtung und die Bedieneinrichtung aufweist;
- Figur 3: ein Fahrzeuginformationssystem mit einem Kartenleser und
- Figur 4: ein Fahrzeuginformationssystem mit einem Mobiltelefon mit Funkverbindungen zu der Anzeigeeinrichtung und der Bedieneinrichtung und einer Koppelantenne.

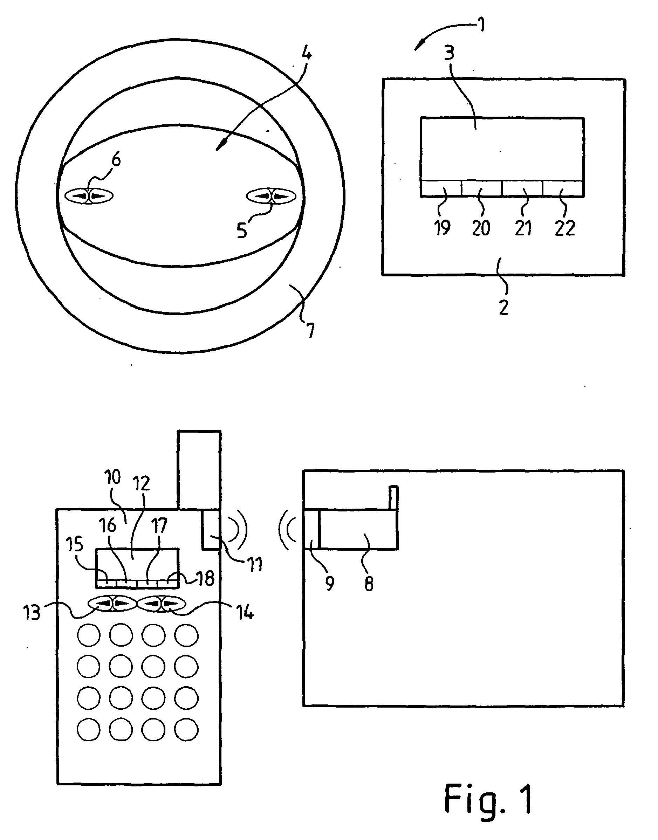

In Figur 1 ist ein Fahrzeugkommunikationssystem 1 dargestellt, welches eine Anzeigeeinrichtung 2 mit einem Display und eine Bedieneinrichtung 4 mit zwei Wipptasten 5, 6 umfasst. Die Bedieneinrichtung 4 ist Bestandteil eines Lenkrades 7 und die Anzeigeeinrichtung 2 ist im Blickfeld des Fahrers oberhalb der Mittelkonsole angeordnet. Gemäß nicht dargestellter Ausführungsvarianten ist es vorgesehen, die Bedieneinrichtung an jedem für den Fahrer leicht erreichbaren Ort zu positionieren. Das Fahrzeugkommunikationssystem 1 umfasst weiter ein Telefonmodul 8, welches über eine drahtlose Schnittstelle 9 SIM-Daten eines Mobiltelefons 10 auf der Grundlage des SIM-Access-Protokolls empfängt, wobei das Mobiltelefon 10 diese über eine drahtlose Schnittstelle 11 abgibt. Das Mobiltelefon 10 weist ein Mobiltelefondisplay 12 und darunter angeordnete Wipptasten 13, 14 auf. Die Wipptasten 13, 14 sind im Mobiltelefondisplay 12 dargestellten Softkeys 15, 16, 17 und 18 zugeordnet. Das Display 3 der Anzeigeeinrichtung 2 weist analog zum Mobiltelefondisplay 12 vier Softkeys 19, 20, 21 und 22 auf. Diese Softkeys 19 bis 22 sind durch die Wipptasten 5, 6 der Bedieneinrichtung 4 anwählbar. Mit Hilfe des Telefonmoduls 8, welches mit der Anzeigeeinrichtung 2 und mit der Bedieneinrichtung 4 drahtgebunden und/oder drahtlos verbunden ist, wird der im Mobiltelefon 10 generierte Inhalt des Mobiltelefondisplays 12 zu der Anzeigeeinrichtung 2 übertragen und auf deren Display 3 anzeigt. In der in der Figur 1 dargestellten Konstellation ist es beispielsweise auch vorgesehen, dass der zum aktuellen Status des Telefonmoduls 8 passende für das Mobiltelefondisplay 12 generierte Displayinhalt lediglich an der Anzeigeeinrichtung 2 angezeigt wird und sich das Mobiltelefondisplay 12 aufgrund der vorhandenen Anbindung an das Telefonmodul 8 in einem inaktiven Wartezustand befindet. Der Nutzer hat nunmehr die Möglichkeit, auf die auf dem Display 3 der Anzeigeeinrichtung 2 angezeigten Informationen mittels der Wipptasten 5 und 6 der Bedieneinrichtung zu reagieren und hierdurch das Telefonmodul 8 zu steuern. Das Fahrzeugkommunikationssystem 1 stellt dem Nutzer mit der Anzeigeeinrichtung 2 und der Bedieneinrichtung 4 somit in größerer und leichter zugänglicher Form sein gewohntes Mobiltelefondisplay 12 und dessen zugehörigen Wipptasten 13 und 14 zur Verfügung.

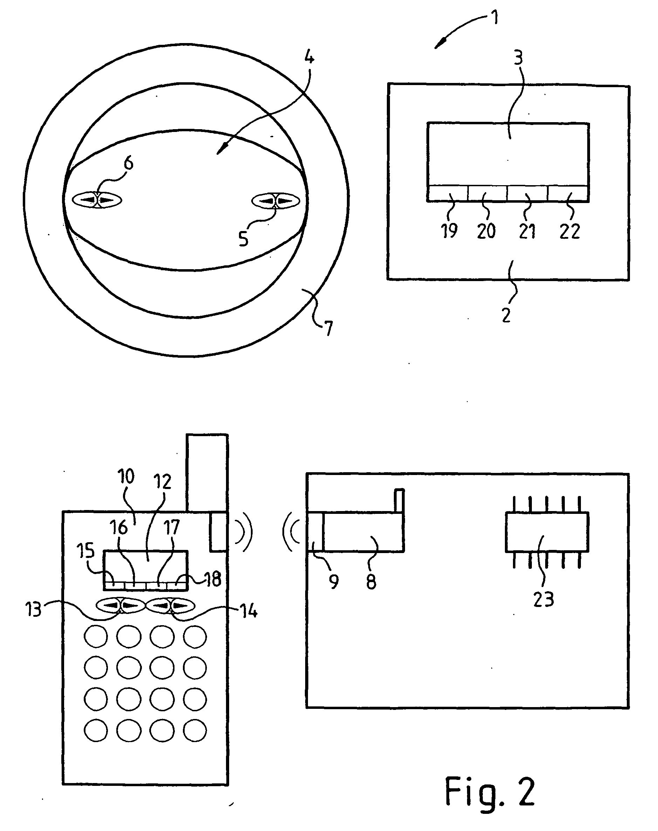

In der Figur 2 sind gleiche Bauteile mit gleichen Bezugszeichen bezeichnet, da diese eine Ausführungsvariante zur Figur 1 darstellt, welche lediglich durch eine Steuereinheit 23 ergänzt ist. Hierbei übernimmt die Steuereinheit 23 in der Zeit, in welcher das Mobiltelefon 10 seine SIM-Daten dem Telefonmodul 8 zur Verfügung stellt, die Generierung des zum jeweiligen Zustand des Telefonmoduls passenden Displayinhalt für das Display 3 der Anzeigeeinrichtung 2. Das heißt, die Steuereinheit 23 ist in der Lage, abhängig vom Typ des eingebuchten Mobiltelefons 10 einen mobiltelefonspezifischen Displayinhalt in weiterer Abhängigkeit vom Zustand des Telefonmoduls 8 zu generieren. Hierbei ist unter dem Zustand des Telefonmoduls 8 beispielsweise ein eingehender Anruf oder das Blättern im Telefonverzeichnis zu verstehen.

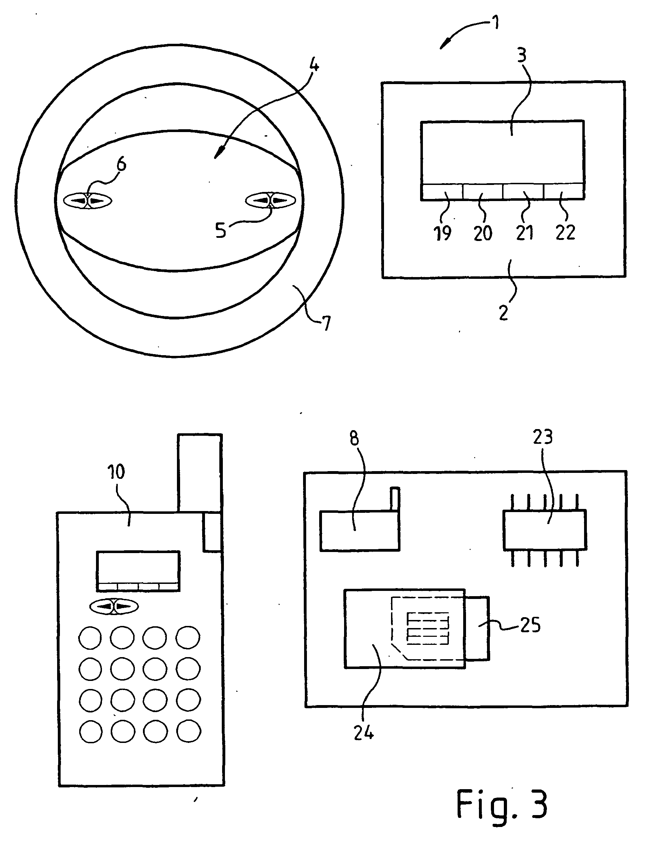

In der Figur 3 ist ein weiteres Fahrzeugkommunikationssystem 1 dargestellt, welches die aus den Figuren 1 und 2 bekannten Komponenten Anzeigeeinrichtung 2 und Bedieneinrichtung 4 aufweist. Insoweit verweisen gleiche Bezugszeichen auf gleiche Bauteile. Im Unterschied zu den in den Figuren 1 und 2 dargestellten Anordnungen wird hier ein Telefonmodul 8 von einem Kartenleser 24, welcher eine SIM-Karte 25 aufnimmt, mit SIM-Daten versorgt. Eine Generierung eines zu einem vom Nutzer bevorzugten Mobiltelefon 10 passenden Displayinhalts für die Anzeigeeinrichtung 2 wird analog zur Beschreibung der vorhergehenden Figur 2 durch eine Steuereinheit 23 vorgenommen. Hierbei ist es vorgesehen, die Steuereinheit 23 über eine nicht dargestellte Schnittstelle auf das entsprechende Mobiltelefon 10 einzustellen bzw. über diese spezifische Daten einzuspielen.

In den Ausführungsvarianten der Figuren 2 und 3 ist somit das Verhalten des Mobiltelefons 10, das exemplarisch für ein Mobiltelefon aus einer Vielzahl unterschiedlicher Mobiltelefone steht, in bezug auf dessen Displayinhalt einschließlich der Softkeys durch die Steuereinheit 23 simulierbar.

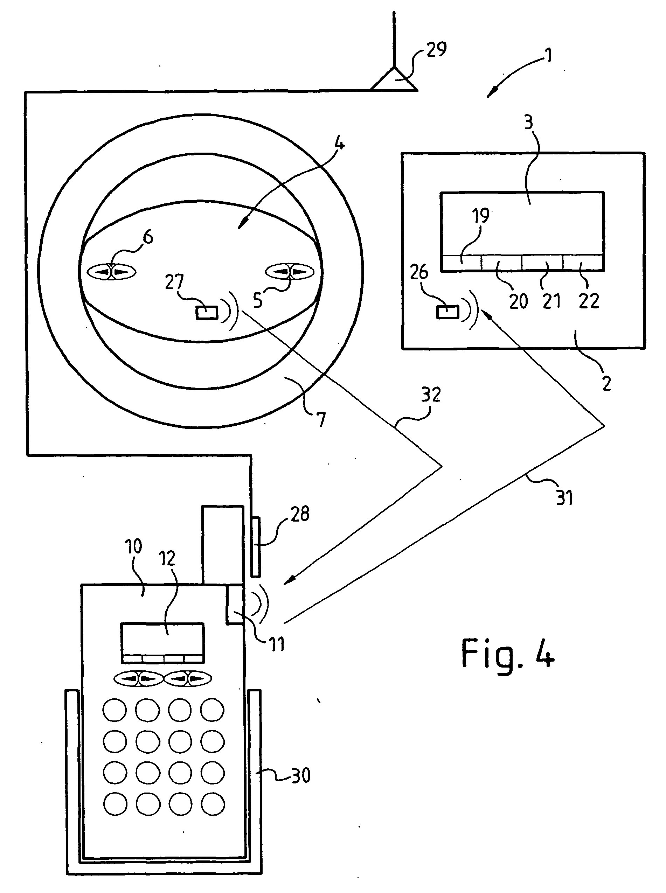

In der Figur 4 sind nochmals die aus den Figuren 1 bis 3 bekannten Komponenten Anzeigeeinrichtung 2 und Bedieneinrichtung 4 des Fahrzeugkommunikationssystems 1 dargestellt und wieder mit den bekannten Bezugszeichen bezeichnet. Zusätzlich weisen hier die Anzeigeeinrichtung 2 und die Bedieneinrichtung 4 jeweils eine drahtlose Schnittstelle 26 bzw. 27 auf, welche eine Kommunikation mit einer drahtlosen Schnittstelle 11 eines Mobiltelefons 10 erlauben. Dem Mobiltelefon 10 ist eine Koppelantenne 28 zugeordnet, welche mit einer Fahrzeugaußenantenne 29 in Verbindung steht, wobei ein nicht dargestellter Signalverstärker zwischengeschaltet ist. Das Mobiltelefon 10 sitzt in einer Halterung 30. Durch die drahtlosen Schnittstellen 11 und 26 ist eine Funkverbindung 31 zwischen dem Mobiltelefon 10 und der Anzeigeeinrichtung 2 realisiert, über welche das Mobiltelefon 10 den Inhalt des Mobiltelefondisplays 12 an die Anzeigeeinrichtung 2 bzw. deren Display 3 überträgt. Eine weitere Funkverbindung 32 ist durch die drahtlosen Schnittstellen 11 und 27 zwischen dem Mobiltelefon 10 und der Bedieneinrichtung 4 realisiert. Diese Funkverbindung 32 dient vornehmlich der Übertragung von Schaltsignalen von der Bedieneinrichtung 4 an das Mobiltelefon 10, wobei die Schaltsignale durch eine Betätigung der Wipptasten 5 bzw. 6 erzeugbar sind.

Die Figuren 1 bis 4 beschreiben somit Fahrzeugkommunikationssysteme mit einer Anzeigeeinrichtung, einer körperlich hiervon getrennten Bedieneinrichtung und einem Mobiltelefon, das ein Mobiltelefondisplay aufweist, und/oder einem Telefonmodul, welches SIM-Daten des Mobiltelefons oder einer zweiten SIM-Karte verwendet, wobei der theoretische bzw. tatsächliche Inhalt des Mobiltelefondisplays einschließlich Softkeys auf der Anzeigeeinrichtung identisch wiedergebbar ist, wobei die auf der Anzeigeeinrichtung dargestellten Softkeys über die Bedieneinrichtung anwählbar sind und wobei die Anzeigeeinrichtung und/oder die Bedieneinrichtung mittels des Mobiltelefons und/oder einer sich identisch wie das Mobiltelefon verhaltenden Steuereinheit steuerbar sind.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche. Insbesondere sieht die Erfindung auch eine drahtgebundene Anbindung des in der Figur 4 dargestellten Mobiltelefons an das Fahrzeugkommunikationssystem vor.

### Bezugszeichenliste:

- 1: Fahrzeugkommunikationssystem
- 2: Anzeigeeinrichtung
- 3: Display von 2
- 4: Bedieneinrichtung
- 5, 6: Wipptaste an 4
- 7: Lenkrad
- 8: Telefonmodul
- 9: drahtlose Schnittstelle des Telefonmoduls 8
- 10: Mobiltelefon
- 11: drahtlose Schnittstelle des Mobiltelefons 10
- 12: Mobiltelefondisplay
- 13, 14: Wipptaste am Mobiltelefon 10
- 15 - 18: Softkey im Mobiltelefondisplay 12
- 19 - 22: Softkey im Display 3
- 23: Steuereinheit
- 24: Kartenleser
- 25: SIM-Karte
- 26: drahtlose Schnittstelle von 2
- 27: drahtlose Schnittstelle von 4
- 28: Koppelantenne
- 29: Fahrzeugaußenantenne
- 30: Halter für Mobiltelefon 10
- 31: Funkverbindung zwischen 10 und 2
- 32: Funkverbindung zwischen 10 und 4

## Patentansprüche

1. Fahrzeugkommunikationssystem (1) mit einer Anzeigeeinrichtung (2) auf welcher die Bedienoberfläche eines Mobiltelefons darstellbar ist sowie einerkörperlich von der Anzeigeeinrichtung (2,3) getrennten Bedieneinrichtung (4, 5, 6), **dadurch gekennzeichnet**, das ein theoretischer bzw. tatsächlicher Inhalt eines Mobiltelefondisplays (12) einschließlich Softkeys (15 - 18) eines beliebigen Mobiltelefons (10) aus einer Vielzahl unterschiedlicher Mobiltelefone, welches im Kraftfahrzeug benutzt wird, auf der Anzeigeeinrichtung (2, 3) darstellbar ist, wobei auf der Anzeigeeinrichtung (2, 3) dargestellte Softkeys (19 - 22) über die Bedieneinrichtung (4, 5, 6) anwählbar sind, und derart ausgestaltet, dass mit Hilfe einer drahtlosen Schnittstelle (26) an der Anzeigeeinrichtung (2) der im Mobiltelefon (10) generierte Inhalt des Mobiltelefondisplays (12) zu der Anzeigeeinrichtung (2) übertragen und auf deren Display (3) angezeigt wird.

2. Fahrzeugkommunikationssystem (1) nach Anspruch 1, **dadurch gekennzeichnet, dass** eine Funkverbindung (32) durch drahtlose Schnittstellen (11, 27) zwischen dem Mobiltelefon (10) und der Bedieneinrichtung (4) realisiert ist, wobei insbesondere eine Übertragung von Schaltsignalen von der Bedieneinrichtung (4) an das Mobiltelefon (10) drahtlos erfolgt.

3. Fahrzeugkommunikationssystem (1) nach Anspruch 1 oder 2, **dadurch gekennzeichnet, dass** mit Hilfe eines Telefonmoduls (8) welches mit der Anzeigeeinrichtung (2) und mit der Bedieneinrichtung (4) verbunden ist, der im Mobiltelefon generierte Inhalt des Mobiltelefondisplays (12) zu der Anzeigeeinrichtung (2) übertragen und auf deren Display (3) angezeigt wird.

4. Fahrzeugkommunikationssystem (1) nach wenigstens einem der Ansprüche 1-3, **dadurch gekennzeichnet, dass** das Mobiltelefon (10), das ein Mobiltelefondisplay (12) aufweist, und/oder ein Telefonmodul (8), welches SIM-Daten des Mobiltelefons (10) oder einer zweiten SIM-Karte (25) verwendet, in das Fahrzeugkommunikationssystem (1) integrierbar ist.

5. Fahrzeugkommunikationssystem (1) nach Anspruch 4, **dadurch gekennzeichnet, dass** die SIM-Daten des Mobiltelefons (10) vom Telefonmodul (8) via Sim-Access-Profile beziehbar sind.

6. Fahrzeugkommunikationssystem (1) nach wenigstens einem der vorhergehenden Ansprüche, **dadurch gekennzeichnet, dass** die Anzeigeeinrichtung (2, 3) und/oder die Bedieneinrichtung (4, 5, 6) mittels des Mobiltelefons (10) und/oder einer sich identisch wie das Mobiltelefon (10) verhaltenden Steuereinheit (23) steuerbar sind.

7. Fahrzeugkommunikationssystem (1) nach wenigstens einem der vorhergehenden Ansprüche, **dadurch gekennzeichnet, dass** das Mobiltelefon (10) eine Funkverbindung (31) mit der Anzeigeeinrichtung (2, 3) aufweist und wenigstens seinen jeweiligen Displayinhalt an die Anzeigeinrichtung (2, 3) übermittelt und dass das Mobiltelefon (10) eine Funkverbindung (32) mit der Bedieneinrichtung (4) aufweist und wenigstens Schaltsignale von der Bedieneinrichtung (4) empfängt.

8. Fahrzeugkommunikationssystem (1) nach wenigstens einem der vorhergehenden Ansprüche, **dadurch gekennzeichnet, dass** das Mobiltelefon (10) mittels einer Koppelantenne (28) in ein Funknetz einbindbar ist.

9. Fahrzeugkommunikationssystem (1) nach wenigstens einem der vorhergehenden Ansprüche, **dadurch gekennzeichnet, dass** die Anzeigeeinrichtung (2) als Projektionsanzeige ausgebildet ist.

10. Fahrzeugkommunikationssystem (1) nach wenigstens einem der vorhergehenden Ansprüche, **dadurch gekennzeichnet, dass** das Telefonmodul (8) und/oder die Anzeigeeinrichtung (2) durch Solarzellen mit elektrischer Energie versorgbar sind.

11. Fahrzeugkommunikationssystem (1) nach wenigstens einem der verhergehenden Ansprüche, **dadurch gekennzeichnet, dass** das Display (3) der Anzeigeeinrichtung (2) Sclarzellen umfasst, durch welche die Anzeigeeinrichtung mit elektrischer Energie versorgbar ist.

12. Fahrzeugkommunikationssystem (1) nach wenigstens einem der vorhergehenden Ansprüche, **dadurch gekennzeichnet, dass** eine Angleichung der Darstellung an das Fahrzeugdisplay hinsichtlich Größe bzw. Auflösung im Mobiltelefon (10) erfolgt.

## Claims

1. Vehicle communication system (1) comprising a display device (2) on which the operating surface of a mobile phone can be displayed, as well as an operating device (4, 5, 6) separated physically from the display device (2, 3), **characterised in that** a theoretical or actual content of a mobile phone display (12) including softkeys (15-18) of any one mobile phone (10) from a number of different mobile phones which is used in the motor vehicle can be displayed on the display device (2, 3), wherein softkeys (19-22) shown on the display device (2, 3) can be selected by the operating device (4, 5, 6) and are configured such that by means of a wireless interface (26) on the display device (2) the content of the mobile phone display (12) generated in the mobile phone (10) is transmitted to the display device (2) and shown on the display (3).

2. Vehicle communication system (1) according to claim 1, **characterised in that** a radio connection (32) is formed by wireless interfaces (11, 27) between the mobile phone (10) and the operating device (4), wherein in particular the transmission of switching signals from the operating device (4) to the mobile phone (10) is wireless.

3. Vehicle communication system (1) according to claim 1 or 2, **characterised in that** by means of a phone module (8) which is connected to the display device (2) and the operating device (4), the content of the mobile phone display (12) generated in the mobile phone is transmitted to the display device (2) and shown on its display (3).

4. Vehicle communication system (1) according to at least one of claims 1-3, **characterised in that** the mobile phone (10) which comprises a mobile phone display (12) and/or a phone module (8) which uses SIM data of the mobile phone (10) or a second SIM card (25), can be integrated into the vehicle communication system (1).

5. Vehicle communication system (1) according to claim 4, **characterised in that** the SIM data of the mobile phone (10) can be taken from the phone module (8) via SIM access profiles.

6. Vehicle communication system (1) according to at least one of the preceding claims, **characterised in that** the display device (2, 3) and/or the operating device (4, 5, 6) can be controlled by means of the mobile phone (10) and/or a control unit (23) that behaves identically to the mobile phone (10).

7. Vehicle communication system (1) according to at least one of the preceding claims, **characterised in that** the mobile phone (10) comprises a radio connection (31) with the display device (2, 3) and transmits at least its respective display content to the display device (2, 3) and **in that** the mobile phone (10) comprises a radio connection (32) with the operating device (4) and receives at least switching signals from the operating device (4).

8. Vehicle communication system (1) according to at least one of the preceding claims, **characterised in that** the mobile phone (10) can be integrated into a radio network by means of a coupling aerial (28).

9. Vehicle communication system (1) according to at least one of the preceding claims, **characterised in that** the display device (2) is designed in the form of a projection display.

10. Vehicle communication system (1) according to at least one of the preceding claims, **characterised in that** the phone module (8) and/or the display device (2) can be supplied with electrical power by solar cells.

11. Vehicle communication system (1) according to at least one of the preceding claims, **characterised in that** the display (3) of the display device (2) comprises solar cells by means of which the display device can be supplied with electrical power.

12. Vehicle communication system (1) according to at least one of the preceding claims, **characterised in that** there is an adjustment of the representation to the vehicle display with regard to the size or resolution in the mobile phone (10).

## Revendications

1. Système de communication de véhicule (1) comportant une installation d'affichage (2) sur laquelle est présentée la surface active d'un téléphone mobile, ainsi qu'une installation de service (4, 5, 6) physiquement distincte de l'installation d'affichage (2, 3),
système **caractérisé en ce qu'**
un contenu théorique ou effectif d'un affichage de téléphone mobile (12) y compris les touches programmables (15-18) d'un quelconque téléphone mobile (10) parmi un grand nombre de téléphones mobiles différents qui sont utilisés dans le véhicule, est représenté par l'installation d'affichage (2, 3),
* les touches programmables (19-22) présentées sur l'installation d'affichage (2, 3) pouvant être sélectionnées par l'installation de service (4, 5, 6) et conçues de façon qu'à l'aide d'une interface de communication sans fil (26) de l'installation d'affichage (2), le contenu de l'affichage de téléphone mobile (12) généré dans le téléphone mobile (10), est transmis à l'installation d'affichage (2) pour être présenté sur son afficheur (3).

2. Système de communication de véhicule (1) selon la revendication 1, **caractérisé par**
une liaison radio (32) par l'interface sans fil (11, 27) entre le téléphone mobile (10) et l'installation de service (4),
- en particulier la transmission des signaux de communication de l'installation de service (4) vers le téléphone mobile (10) se fait par une transmission sans fil.

3. Système de communication de véhicule (1) selon la revendication 1 ou 2,
**caractérisé en ce que**
le contenu de l'affichage de téléphone mobile (12) généré dans le téléphone mobile est transmis à l'installation d'affichage (2) à l'aide d'un module de téléphone (8) relié à l'installation d'affichage (2) et à l'installation de service (4) et ce contenu apparaît sur l'afficheur (3).

4. Système de communication de véhicule (1) selon l'une des revendications 1 à 3,
**caractérisé en ce que**
le téléphone mobile (10) qui a un affichage de téléphone mobile (12) et/ou un module de téléphone (8) utilisant les données SIM du téléphone mobile (10) ou d'une seconde carte SIM (25), peut être intégré dans le système de communication de véhicule (1).

5. Système de communication de véhicule (1) selon la revendication 4, **caractérisé en ce que**
les données SIM du téléphone mobile (10) sont obtenues par le téléphone mobile (8) à partir du profil d'accès SIM.

6. Système de communication de véhicule (1) selon l'une des revendications précédentes,
**caractérisé en ce que**
l'installation d'affichage (2, 3) et/ou l'installation de service (4, 5, 6) commandées par le téléphone mobile (10) et/ou une unité de commande (23) se comportent comme le téléphone mobile (10).

7. Système de communication de véhicule (1) selon l'une des revendications précédentes,
**caractérisé en ce que**
- le téléphone mobile (10) a une liaison radio (31) avec l'installation d'affichage (2, 3) et transmet respectivement son contenu d'affichage à l'installation d'affichage (2, 3), et
- le téléphone mobile (10) a une liaison radio (32) avec l'installation de service (4) et il reçoit au moins les signaux de commutation de l'installation de service (4).

8. Système de communication de véhicule (1) selon l'une des revendications précédentes,
**caractérisé en ce que**
le téléphone mobile (10) est relié au réseau radio par une antenne de couplage (28).

9. Système de communication de véhicule (1) selon l'une des revendications précédentes,
**caractérisé en ce que**
l'installation d'affichage (2) est un affichage par projection.

10. Système de communication de véhicule (1) selon l'une des revendications précédentes,
**caractérisé en ce que**
le module de téléphone (8) et/ou l'installation d'affichage (2) sont alimentés en énergie électrique à partir de cellules solaires.

11. Système de communication de véhicule (1) selon l'une des revendications précédentes,
**caractérisé en ce que**
l'afficheur (3) de l'installation d'affichage (2) comporte des cellules solaires alimentant l'installation d'affichage en énergie électrique.

12. Système de communication de véhicule (1) selon l'une des revendications précédentes,
**caractérisé par**
un équilibrage de la représentation de la taille et de la résolution à l'affichage du véhicule dans le téléphone mobile (10).
